# FASCICULE DE BREVET EUROPEEN

(11) **EP 3 472 443 B1**
(45) Date de publication et mention de la délivrance du brevet: **24.06.2020**
(21) Numéro de dépôt: 17734801.8
(22) Date de dépôt: 15.06.2017
(51) Int. Cl.: F02C 7/232, F02C 7/228, F02C 7/264

(54) **SURVEILLANCE DE COLMATAGE DANS UN CIRCUIT DE PURGE D'INJECTEUR DE DEMARRAGE POUR TURBOMACHINE**
VERSTOPFUNGSKONTROLLE IN EINEM INJEKTORSPÜLKREISLAUF EINES ANLASSERS FÜR EINE TURBOMASCHINE
CLOGGING MONITORING IN A STARTER INJECTOR PURGE CIRCUIT FOR A TURBOMACHINE

(30) Priorité: 17.06.2016 FR 1655658
(43) Date de publication de la demande: 24.04.2019
(73) Titulaire: Safran Helicopter Engines, 64510 Bordes (FR)
(72) Inventeur: DUCHAINE, Patrick, 77550 Moissy-Cramayel (FR); VERDIER, Hubert, Pascal, 77550 Moissy-Cramayel (FR)
(74) Mandataire: Brevalex
(86) Numéro de dépôt international: PCT/FR2017/051553
(87) Numéro de publication internationale: WO 2017/216490

(56) Documents cités:
- WO-A1-2014/118457
- CA-A1- 2 901 520
- FR-A1- 2 949 352
- FR-A1- 2 987 400
- GB-A- 2 278 295

## Description

### DOMAINE TECHNIQUE

L'invention se rapporte aux systèmes d'alimentation en carburant pour turbomachine d'aéronef. Plus précisément, elle concerne la surveillance du colmatage au sein du système d'alimentation.

### ÉTAT DE LA TECHNIQUE ANTÉRIEURE

Un système d'alimentation en carburant pour turbomachine comprend généralement un circuit de démarrage et un circuit principal.

De manière connue, le circuit de démarrage n'est alimenté en carburant que pendant la phase de démarrage. Une fois le démarrage de la turbomachine effectué, le circuit de démarrage est purgé pour éviter la stagnation du carburant. En effet, une stagnation de carburant pourrait conduire à de la cokéfaction, c'est-à-dire à des dépôts carbonés solides, qui risque de colmater le système d'alimentation.

Une manière de purger le circuit de démarrage consiste à mettre en communication, après la fin de la phase de démarrage, la tuyauterie d'alimentation des injecteurs de démarrage avec de l'air à la pression atmosphérique. Le carburant présent dans l'injecteur et les tuyauteries est ainsi purgé du fait de la différence de pression entre l'air pressurisé en provenance de la sortie compresseur et l'air à la pression atmosphérique. Un tel phénomène est qualifié de purge inverse, car l'air de purge circule dans le sens inverse de celui du carburant lors de la phase de démarrage.

Malgré ces précautions, il se produit de la cokéfaction, dans certaines conditions, dans le circuit de démarrage et le circuit de purge, ce qui conduit à un colmatage partiel ou total du système d'alimentation.

Il existe donc un besoin pour surveiller le colmatage du circuit de démarrage et/ou du circuit de purge.

CA 2 901520 décrit un procédé de surveillance de colmatage des injecteurs de démarrage, connu de l'état de la technique.

### EXPOSÉ DE L'INVENTION

L'invention vise à résoudre au moins partiellement les problèmes rencontrés dans les solutions de l'art antérieur.

A cet égard, l'invention a pour objet un système d'alimentation en carburant pour turbomachine. Le système d'alimentation comprend :
- un circuit de démarrage comprenant au moins un injecteur de démarrage,
- au moins une première résistance hydraulique, et
- un circuit de purge comprenant un conduit comportant une ouverture débouchant à l'extérieur du système d'alimentation. Le circuit de purge est configuré pour écouler de l'air de purge entre l'injecteur de démarrage et l'ouverture, à travers la première résistance hydraulique.

Selon l'invention, le système d'alimentation comprend des moyens de mesure configurés pour mesurer une valeur représentative de pression entre l'injecteur de démarrage et la première résistance hydraulique, lors d'un écoulement d'air de purge entre l'injecteur de démarrage et la première résistance hydraulique.

Ainsi, la valeur représentative de pression permet de détecter un colmatage dans le circuit de démarrage et/ou le circuit de purge, avant que ce colmatage soit tel qu'il conduise à une immobilisation de la turbomachine.

Une fois qu'un colmatage a été détecté, les opérations de maintenance requises peuvent avoir lieu avant l'immobilisation de la turbomachine comprenant le système d'alimentation. Ces opérations de maintenance comprennent par exemple un décrassage et/ou le remplacement de composants du système d'alimentation.

L'invention peut comporter de manière facultative une ou plusieurs des caractéristiques suivantes combinées entre elles ou non.

Il est possible que le circuit de purge comprenne une deuxième résistance hydraulique située entre la première résistance hydraulique et l'injecteur de démarrage ; dans ce cas, les moyens de mesure étant configurés pour mesurer la valeur représentative de pression entre la première résistance hydraulique et la deuxième résistance hydraulique.

Selon une particularité de réalisation, la première résistance hydraulique et/ou la deuxième résistance hydraulique comprennent une vanne, un filtre et/ou un réstricteur de débit tel qu'un rétrécissement du conduit de purge.

Selon une forme de réalisation avantageuse, le système d'alimentation comprend un dispositif de surveillance de colmatage configuré pour comparer la valeur représentative de pression à une valeur de référence.

Avantageusement, le dispositif de surveillance est configuré pour signaler une information de colmatage, si la valeur absolue de l'écart entre la valeur représentative de pression et la valeur de référence excède une première valeur seuil.

Selon une forme de réalisation avantageuse, le dispositif de surveillance est configuré pour signaler une information de colmatage d'une première partie du circuit de purge, située en amont de l'endroit de la mesure de la valeur représentative de pression, si :
- une valeur relative de l'écart entre la valeur représentative de pression et la valeur de référence est négative, et que
- la valeur relative de l'écart est inférieure à une deuxième valeur seuil.

Selon une autre forme de réalisation avantageuse, le dispositif de surveillance est configuré pour signaler une information de colmatage d'une deuxième partie du circuit de purge, située en aval de l'endroit de la mesure de la valeur représentative de pression, si :
- la valeur relative de l'écart entre la valeur représentative de pression et la valeur de référence est positive, et que
- la valeur relative de l'écart est supérieure à une troisième valeur seuil.

Les termes « amont » et « aval » sont définis dans le circuit de purge par référence au sens de l'écoulement d'air de purge.

De préférence, le circuit de purge est un circuit de purge dit inverse, c'est-à-dire que l'air de purge s'écoule dans le sens contraire de celui pris par le carburant pour initier la combustion dans la turbomachine. L'air de purge passe alors plus tôt dans les injecteurs de démarrage qui seraient particulièrement susceptibles de se « cokéfier ».

Avantageusement, le système d'alimentation comprend un dispositif d'alerte configuré pour se déclencher en cas de signalisation d'une information de colmatage par le dispositif de surveillance.

L'invention concerne également une turbomachine comprenant un système d'alimentation tel que défini ci-dessus. De préférence, la turbomachine est une turbomachine pour aéronef tel qu'un turboréacteur ou un turbopropulseur.

L'invention porte en outre sur un procédé de surveillance de colmatage d'un système d'alimentation en carburant tel que défini ci-dessus.

Avantageusement, le procédé de surveillance comprend une étape de signalisation d'une information de colmatage, si la valeur absolue de l'écart entre la valeur représentative de pression et la valeur de référence excède la première valeur seuil,
la valeur représentative de pression étant mesurée entre l'injecteur de démarrage et la première résistance hydraulique, lors d'un écoulement d'air de purge entre l'injecteur de démarrage et la première résistance hydraulique.

Selon une forme de réalisation avantageuse, l'écoulement d'air de purge a lieu depuis l'injecteur de démarrage jusqu'à l'ouverture, à travers la première résistance hydraulique.

Selon une autre forme de réalisation avantageuse, la valeur de référence est prédéterminée.

En variante, la valeur de référence est déterminée en fonction d'au moins une valeur représentative de pression au cours d'au moins un vol précédent de la turbomachine qui est une turbomachine pour aéronef.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle en coupe longitudinale d'une turbomachine, selon un mode de réalisation préféré de l'invention ;
- la figure 2 est une représentation schématique partielle d'un système d'alimentation en carburant pour turbomachine, selon un premier mode de réalisation de l'invention ;
- la figure 3 est une représentation schématique partielle d'un système d'alimentation en carburant pour turbomachine, selon un deuxième mode de réalisation de l'invention ;
- la figure 4 illustre la mise en œuvre d'un procédé de détection de colmatage dans un système d'alimentation selon le premier ou le deuxième mode de réalisation de l'invention.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

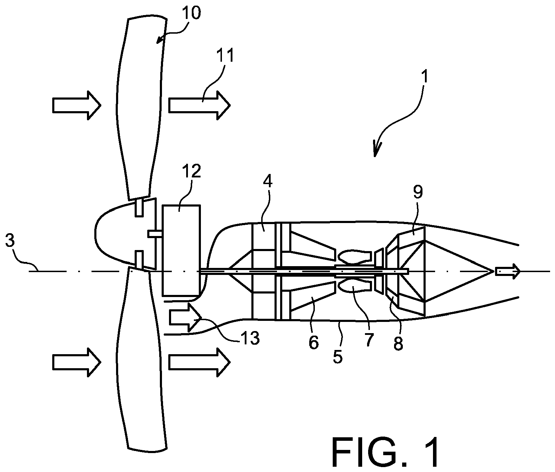

La figure 1 représente un turbopropulseur 1 qui est partiellement annulaire autour d'un axe 3 de turbine de puissance.

La turbomachine 1 comporte, de l'amont vers l'aval en considérant un cheminement dans la direction de l'axe 3, une hélice 10, un réducteur 12, des bras radiaux de carter 4, un compresseur 6, une chambre de combustion 7, une turbine haute pression 8 et une turbine de puissance 9.

Le compresseur 6, la chambre de combustion 7, la turbine haute pression 8 et la turbine de puissance 9 sont entourés par un carter 5. Ils définissent en commun en relation avec le carter 5 une veine primaire 13 traversée par un flux primaire s'écoulant dans une direction opposée à la direction d'avancement de la turbomachine. La direction d'écoulement du flux primaire est représentée par la flèche 11. Cette direction correspond également à celle de la force de poussée de la turbomachine 1 en fonctionnement.

La poussée des gaz en sortie de chambre de combustion 7 entraîne le compresseur 6 et les turbines 8 et 9 en rotation autour de l'axe 3 de la turbine de puissance. La rotation de la turbine de puissance 9 autour de son axe 3 est transmise à l'hélice 10 par l'intermédiaire du réducteur 12, pour la faire tourner.

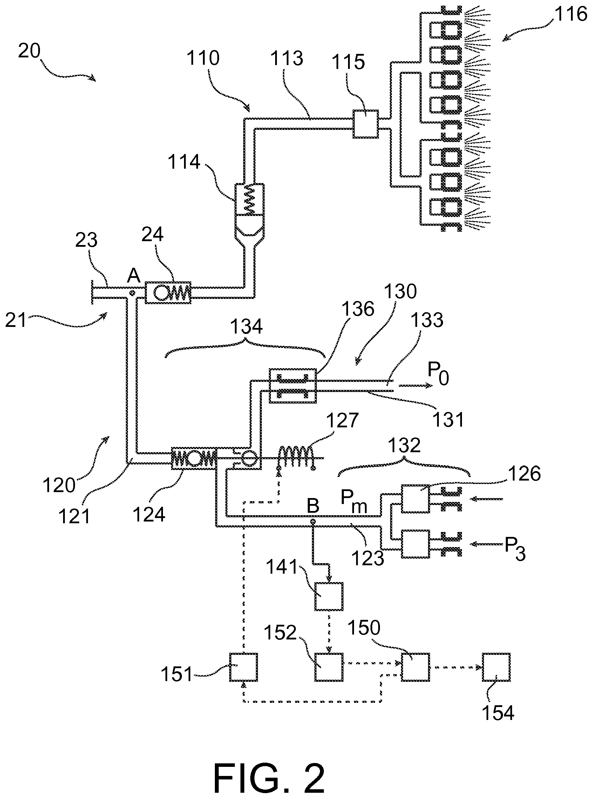

La figure 2 représente un système d'alimentation 20 en carburant de la chambre de combustion 7.

Le système d'alimentation 20 comprend un circuit amont 21 comprenant un conduit de distribution 23 qui mène à un nœud A de séparation d'un circuit principal 110 et d'un circuit de démarrage 120.

Le nœud de séparation A est situé au niveau d'une vanne de répartition 24 qui est configurée pour répartir le carburant entre le circuit principal 110 et le circuit de démarrage 120. Cette vanne 24 comprend par exemple un tiroir (non représenté) pour égaliser la pression du carburant dans le circuit principal 110 et celle dans le circuit de démarrage 120.

Le circuit principal 110 comprend une vanne 114, un conduit d'alimentation des injecteurs principaux 113 et des injecteurs principaux 116. Ces injecteurs principaux 116 alimentent en carburant la chambre de combustion 2 en régime permanent de la turbomachine 1.

Le circuit principal 110 comporte également une résistance hydraulique 115 comprenant un filtre, un échangeur et/ou un débitmètre. La résistance hydraulique 115 est située entre la vanne 114 et les injecteurs principaux 116.

Le terme « résistance hydraulique » sert à définir dans ce document, par analogie avec le domaine de l'électricité, la grandeur issue du rapport entre la différence de pression de fluide entre l'entrée et la sortie d'un élément du système d'alimentation sur le débit de fluide traversant l'élément, de même que l'élément caractérisé par cette grandeur.

Le circuit de démarrage 120 comporte un conduit d'entrée 121 qui est raccordé à sa première extrémité au nœud de séparation A et à sa deuxième extrémité, opposée à la première extrémité, à une vanne de régulation 124. La vanne de régulation 124 est reliée fluidiquement aux injecteurs de démarrage 126.

Ces injecteurs de démarrage 126 sont à proximité de bougies d'allumage (non représentées), de manière à initier la combustion dans la chambre de combustion 2. Ils sont distincts des injecteurs principaux 116. Une fois que la combustion a été initiée dans la turbomachine 1, les injecteurs de démarrage 116 sont éteints et ils sont traversés par de l'air de purge.

La vanne de régulation 124 comprend une première sortie qui débouche dans un conduit 123 d'alimentation des injecteurs de démarrage et une deuxième sortie qui débouche dans un conduit de purge 131 d'un circuit de purge 130.

La vanne de régulation 124 comporte un obturateur mobile entre une première position d'ouverture où il libère la première sortie et une deuxième position d'ouverture dans laquelle il libère la deuxième sortie.

Lorsque l'obturateur est en première position d'ouverture, il laisse du carburant s'écouler depuis la conduite d'entrée 121 jusqu'à la première sortie, en direction des injecteurs de démarrage 126. Il empêche la circulation d'air ou de carburant entre les injecteurs de démarrage 126 et le conduit de purge 131.

Lorsque l'obturateur est en deuxième position d'ouverture, il laisse de l'air de purge circuler entre les injecteurs de démarrage 126 et le conduit de purge 131. Il empêche du carburant de s'écouler depuis la conduite d'entrée 121 jusqu'aux injecteurs de démarrage 126.

La vanne de régulation 124 est commandée électriquement. La position de l'obturateur est commandée par le système électronique de régulation 150 de la turbomachine 1, par l'intermédiaire d'un premier module électronique de régulation 151 et d'un solénoïde 127.

Le système électronique de régulation 150 est également connu sous le nom de « FADEC » ou « Full Authority Digital Engine Control ». De manière classique, ce système électronique de régulation 150 comprend un calculateur moteur à deux voies symétriques, redondantes et à pleine autorité.

Le circuit de purge 130 comprend des moyens d'injection d'air chaud et sous pression en provenance du compresseur 6, les injecteurs de démarrage 126, la vanne de régulation 124 et un réstricteur de débit 136.

Les injecteurs de démarrage 126, la vanne de régulation 124, ainsi que le conduit 123 d'alimentation des injecteurs de démarrage sont communs au circuit de démarrage 120 et au circuit de purge 130.

Le circuit de purge 130 comprend également le conduit de purge 131 qui débouche dans la deuxième sortie de la vanne de régulation 124. Le conduit de purge 131 et le réstricteur de débit 136 sont spécifiques au circuit de purge 130.

Le conduit de purge 131 comprend une ouverture 133 qui débouche sur l'extérieur du système d'alimentation 20. L'ouverture 133 est située à l'extrémité du conduit de purge qui est opposée à celle qui débouche dans la vanne de régulation 124.

Le réstricteur de débit 136 prend par exemple la forme d'un rétrécissement de la conduite de purge 131. Il limite les fuites de carburant en cas de défaillance de la vanne de régulation 124.

Les moyens d'injection d'air injectent de l'air en provenance du compresseur 6 au niveau des injecteurs de démarrage 126 et en direction du réstricteur de débit 136.

Le circuit de purge 130 est alors un circuit de purge dit « inverse », c'est-à-dire que l'air de purge s'écoule dans le sens contraire de celui pris par le carburant pour initier la combustion dans la turbomachine.

Dans le document, les termes « amont » et « aval » sont utilisés en référence au circuit de purge 130, par rapport au sens d'écoulement de l'air de purge et sauf précisions contraires.

L'air de purge s'écoule depuis le compresseur 6, à travers successivement les injecteurs de démarrage 126, le conduit d'alimentation des injecteurs de démarrage 123, la vanne de régulation 124, le réstricteur de débit 136 et l'ouverture 133 du conduit de purge 131.

L'air au niveau de l'ouverture 133 est à une pression P₀ qui est celle de l'air ambiant. Elle est inférieure à celle P₃ de l'air en provenance du compresseur 6 qui est au niveau des injecteurs de démarrage 126.

Le système d'alimentation 20 comprend également un capteur de pression 141 qui joue le rôle de moyens de mesure de valeur représentative de pression. La valeur représentative de pression Pₘ est une valeur de mesure de pression.

Le capteur de pression 141 mesure la pression dans le conduit 123 d'alimentation des injecteurs de démarrage 126 à l'endroit qui est représenté à la figure 2 par un premier nœud de mesure B. Ce premier nœud de mesure B est situé entre les injecteurs de démarrage 126 et la vanne de régulation 124 qui est une résistance hydraulique pour l'air de purge.

Les injecteurs de démarrage 126 sont en amont du premier nœud de mesure B, vis-à-vis de l'écoulement d'air de purge dans le circuit de purge 130. Ils forment donc une partie amont 132 du circuit de purge 130.

La vanne de régulation 124 et le réstricteur de débit 126 sont en aval du premier nœud de mesure B, vis-à-vis de l'écoulement d'air de purge dans le circuit de purge 130. Ils forment une partie aval 134 du circuit de purge 130.

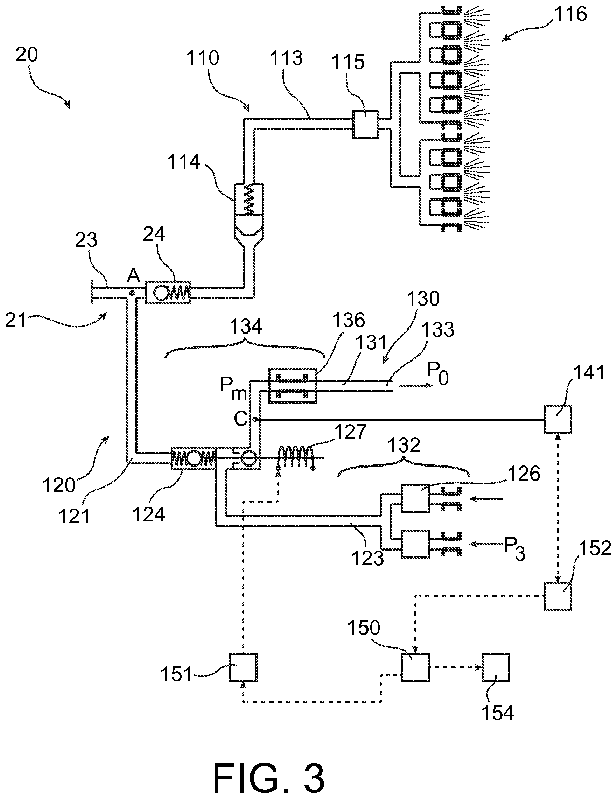

Le deuxième mode de réalisation, qui est représenté en référence à la figure 3, se distingue du premier mode de réalisation par l'endroit de la mesure de la valeur représentative de pression Pₘ.

Dans le deuxième mode de réalisation, le capteur de pression 141 mesure la pression dans le conduit de purge 131 entre le réstricteur de débit 136 et la vanne de régulation 124, à un endroit qui est représenté par le deuxième nœud de mesure C à la figure 3.

Le réstricteur de débit 136 joue le rôle de première résistance hydraulique, la vanne de régulation 124 joue le rôle de deuxième résistance hydraulique. La mesure de valeur représentative de pression Pₘ a alors lieu entre cette première résistance hydraulique et cette deuxième résistance hydraulique.

Les injecteurs de démarrage 126 et la vanne de régulation 124 sont en amont du deuxième nœud de mesure C, vis-à-vis de l'écoulement d'air de purge dans le circuit de purge 130. Ils forment donc une partie amont 132 du circuit de purge 130.

Le réstricteur de débit 136 est en aval du deuxième nœud de mesure C, vis-à-vis de l'écoulement d'air de purge dans le circuit de purge 130. Il forme une partie aval 134 du circuit de purge 130.

Dans le premier et dans le deuxième mode de réalisation, le signal émis par le capteur de pression 141 est transmis à un deuxième module de commande électronique 152 et au système électronique de régulation 150.

Le deuxième module de commande 152 et le système électronique de régulation 150 comprennent une mémoire et des moyens de traitement de la valeur représentative de pression Pₘ.

Ils forment un dispositif de surveillance 150 de colmatage du système d'alimentation 20, en particulier du circuit de purge 130. Le dispositif de surveillance 150 est destiné à signaler une information de colmatage à un dispositif d'alerte 154.

L'information de colmatage traduit un début de colmatage dans le système d'alimentation 20 et/ou un risque statistiquement significatif que la turbomachine 1 soit immobilisée avant un nombre prédéterminé de vols du fait d'un colmatage.

Le dispositif d'alerte 154 se déclenche en cas de signalisation d'une information de colmatage par le dispositif de surveillance 150. Il émet une alerte lumineuse, tactile et/ou sonore, de manière à informer un pilote et/ou un opérateur de maintenance à temps d'un risque de colmatage.

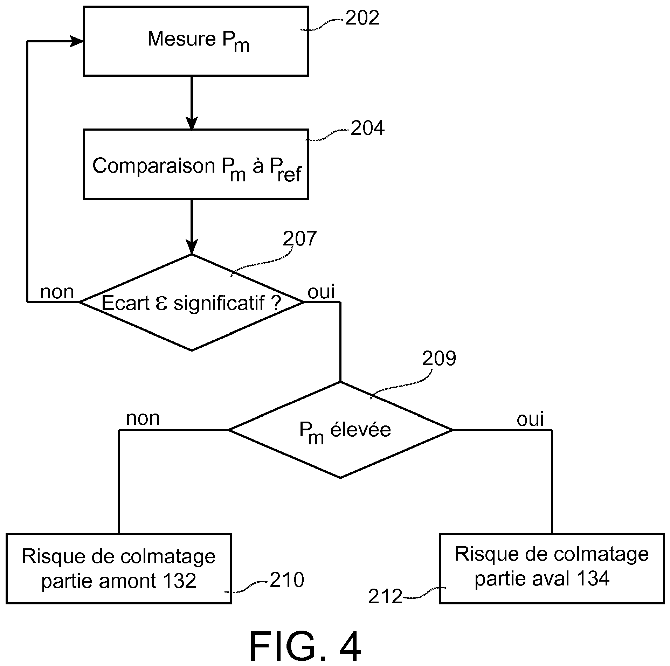

Le procédé de surveillance de colmatage du système d'alimentation 20, notamment du circuit de purge 130 est illustré à la figure 4.

La valeur représentative de pression Pₘ est tout d'abord mesurée dans le système d'alimentation, au premier nœud B et/ou au deuxième nœud C, à une étape de mesure 202. L'étape de mesure 202 a lieu lors d'un écoulement d'air de purge depuis les injecteurs de démarrage 126 vers l'ouverture 133, à travers la vanne de régulation 124 et le réstricteur de débit 136.

Puis, le dispositif de surveillance 150 compare la valeur représentative de pression Pₘ à une valeur de référence P_{ref}, à une étape de comparaison 204.

La valeur de référence P_{ref} est soit prédéterminée, soit elle correspond à une ancienne valeur, éventuellement moyennée, de la valeur représentative de pression Pm.

Lorsqu'elle est prédéterminée, la valeur de référence P_{ref} correspond à une valeur nominale de pression dans le conduit 123 d'alimentation des injecteurs de démarrage.

Lorsqu'elle est déterminée en fonction de l'évolution de pression dans le conduit d'alimentation 123, la valeur de référence valeur P_{ref} est établie à partir d'au moins une valeur représentative de pression Pₘ au cours d'au moins un vol précédent de la turbomachine 1.

Le dispositif de surveillance 150 signale ensuite une information de colmatage si l'écart ε entre la valeur représentative de pression Pₘ et une valeur de référence P_{ref} est suffisamment important, à une étape 207.

Le dispositif de surveillance 150 signale une information de colmatage, si la valeur absolue de l'écart ε entre la valeur représentative de pression Pₘ et la valeur de référence P_{ref} excède une première valeur seuil S₁. Cette condition est appelée « première condition ».

Le dispositif de surveillance 150 ne calcule pas nécessairement la valeur absolue de l'écart ε, pour vérifier la première condition. Il lui suffit de calculer par exemple la valeur relative de l'écart ε entre la valeur représentative de pression Pₘ et la valeur de référence P_{ref}.

Le dispositif de surveillance 150 vérifie si une baisse significative de la valeur représentative de pression Pₘ est détectée, par comparaison avec la valeur de référence P_{ref}, à l'étape 209. Cette condition est appelée « deuxième condition ».

La deuxième condition revient à vérifier, si :
- une valeur relative de l'écart ε entre la valeur représentative de pression Pm et la valeur de référence Pref est négative et que
- la valeur relative de l'écart ε est inférieure à une deuxième valeur seuil S₂.

Dans le premier et le deuxième mode de réalisation, la deuxième valeur seuil S₂ a pour valeur l'opposé de la première valeur seuil S₁.

Le dispositif de surveillance 150 vérifie aussi si une augmentation significative de la valeur représentative de pression Pₘ est détectée, par comparaison avec la valeur de référence P_{ref}, à l'étape 209. Cette condition est appelée « troisième condition ».

La troisième condition revient à vérifier, si :
- la valeur relative de l'écart ε entre la valeur représentative de pression Pm et la valeur de référence P_{ref} est positive et que
- la valeur relative de l'écart ε est supérieure à une troisième valeur seuil S₃.

Dans le premier et le deuxième mode de réalisation, la troisième valeur seuil S₃ est égale à celle de la première valeur seuil S₁.

La vérification de la deuxième condition et de la troisième condition peut être effectuée en même temps que la vérification de la première condition, puisque les valeurs absolues des seuils S₁, S₂ et S₃ sont identiques. En d'autres termes, les étapes 207 et 209 peuvent être confondues.

Lorsque la deuxième condition est remplie, le dispositif de surveillance 150 a constaté une baisse significative de la valeur représentative de pression Pₘ. Il signale alors une information de colmatage de la partie amont 132 du circuit de purge, c'est-à-dire en amont de l'endroit de la mesure de la valeur représentative de pression Pₘ vis-à-vis de l'écoulement d'air de purge.

Le dispositif d'alerte 154 avertit le pilote et/ou un opérateur de maintenance d'un risque de colmatage des injecteurs de démarrage 126, à une étape 210 et en référence au premier mode de réalisation.

Le dispositif d'alerte 154 avertit le pilote et/ou un opérateur de maintenance d'un risque de colmatage des injecteurs de démarrage 126 et/ou de la vanne de régulation 124, à une étape 210 et en référence au deuxième mode de réalisation.

Lorsque la troisième condition est remplie, le dispositif de surveillance 150 a constaté une augmentation significative de la valeur représentative de pression Pₘ. Il signale alors une information de colmatage de la partie aval 134 du circuit de purge, c'est-à-dire en aval de l'endroit de la mesure de la valeur représentative de pression Pₘ vis-à-vis de l'écoulement d'air de purge.

Le dispositif d'alerte 154 avertit le pilote et/ou un opérateur de maintenance d'un risque de colmatage de la vanne de régulation 124 et/ou du réstricteur de débit 136, à une étape 212 et en référence au premier mode de réalisation.

Le dispositif d'alerte 154 avertit le pilote et/ou un opérateur de maintenance d'un risque de colmatage du réstricteur de débit 136, à une étape 212 et en référence au deuxième mode de réalisation.

Bien entendu, diverses modifications peuvent être apportées par l'homme du métier à l'invention qui vient d'être décrite sans sortir du cadre de l'exposé de l'invention.

Le réstricteur de débit 136 est une résistance hydraulique qui peut prendre différente forme.

Les moyens de mesure de valeur représentative de pression 141 peuvent comprendre un capteur de température, en plus ou à la place du capteur de pression. La valeur représentative de pression Pₘ est alors une mesure de température. Dans ce cas, la pression aux nœuds de mesure B et/ou C est déterminée à l'aide d'une équation d'état de l'air à partir de cette mesure de température.

Le système d'alimentation 20 peut à la fois effectuer des mesures de valeurs représentatives de pression Pₘ au premier nœud de mesure B et au deuxième nœud de mesure C. Dans ce cas, le dispositif de surveillance 150 permet de mieux discriminer un risque de colmatage de la vanne de régulation 124 d'un risque de colmatage des injecteurs 126 et d'un risque de colmatage du réstricteur de débit 136.

La valeur représentative de pression Pₘ est de préférence mesurée en amont du restricteur de débit 136 dans le circuit de purge 130, afin de faciliter la détection d'un colmatage.

Le deuxième seuil S₂ et/ou le troisième seuil S₃ peuvent avoir des valeurs différentes de celle l'opposé du premier seuil S₁ et du premier seuil S₁, notamment si le capteur de pression 141 détecte plus facilement une hausse de pression qu'une baisse de pression ou réciproquement.

Les modes de réalisation représentés aux figures 2 et 3 comprennent un circuit de purge 130 à purge dit « inverse » mais il est entendu que l'air de purge pourrait circuler dans l'autre sens dans le circuit de purge 130. Le carburant et l'air de purge circuleraient alors dans le même sens dans le circuit de purge 130 et dans le circuit de démarrage 120.

L'air de purge s'écoulerait alors depuis le compresseur 6, à travers successivement l'ouverture 133, le réstricteur de débit 136, la vanne de régulation 124 et les injecteurs de démarrage 126.

Dans une telle configuration, les parties amont 132 et aval 134 seraient interverties par rapport au nœud B et/ou C de mesure de la valeur représentative de pression.

Lorsque la deuxième condition est remplie après une mesure au niveau du premier nœud B, le dispositif d'alerte 154 avertit le pilote et/ou un opérateur de maintenance d'un risque de colmatage du réstricteur de débit 136 et/ou de la vanne de régulation 124, à une étape 210.

Lorsque la deuxième condition est remplie après une mesure au niveau du deuxième nœud C, le dispositif d'alerte 154 avertit le pilote et/ou un opérateur de maintenance d'un risque de colmatage du réstricteur de débit, à une étape 210.

Lorsque la troisième condition est remplie après une mesure au niveau du premier nœud B, le dispositif d'alerte 154 avertit le pilote et/ou un opérateur de maintenance d'un risque de colmatage des injecteurs de démarrage 126, à une étape 212.

Lorsque la troisième condition est remplie après une mesure au niveau du deuxième nœud C, le dispositif d'alerte 154 avertit le pilote et/ou un opérateur de maintenance d'un risque de colmatage de la vanne de régulation et/ou des injecteurs de démarrage 126, à une étape 212.

## Revendications

1. Système d'alimentation (20) en carburant pour turbomachine (1), comprenant :
un circuit de démarrage (120) comprenant au moins un injecteur de démarrage (126),
au moins une première résistance hydraulique (124, 136),
un circuit de purge (130) comprenant un conduit (131) comportant une ouverture (133) débouchant à l'extérieur du système d'alimentation (20),
le circuit de purge (130) étant configuré pour écouler de l'air de purge entre l'injecteur de démarrage (126) et l'ouverture (133), à travers la première résistance hydraulique (124, 136),
**caractérisé en ce que** le système d'alimentation (20) comprend des moyens de mesure de valeur représentative de pression (141) configurés pour mesurer une valeur représentative de pression (Pₘ) entre l'injecteur de démarrage (126) et la première résistance hydraulique (124, 136), lors d'un écoulement d'air de purge entre l'injecteur de démarrage (126) et la première résistance hydraulique (124, 136).

2. Système d'alimentation (20) selon la revendication précédente, dans lequel le circuit de purge (130) comprend une deuxième résistance hydraulique (124) située entre la première résistance hydraulique (136) et l'injecteur de démarrage (126),
les moyens de mesure (141) étant configurés pour mesurer la valeur représentative de pression (Pₘ) entre la première résistance hydraulique (136) et la deuxième résistance hydraulique (124).

3. Système d'alimentation (20) selon l'une quelconque des revendications précédentes, dans lequel la première résistance hydraulique (136) et/ou la deuxième résistance hydraulique (124) comprennent une vanne, un filtre et/ou un restricteur de débit tel qu'un rétrécissement du conduit de purge.

4. Système d'alimentation (20) selon l'une quelconque des revendications précédentes, comprenant un dispositif de surveillance de colmatage (150) configuré pour comparer la valeur représentative de pression (Pₘ) à une valeur de référence (P_{ref}).

5. Système d'alimentation (20) selon la revendication précédente, dans lequel le dispositif de surveillance (150) est configuré pour signaler une information de colmatage, si la valeur absolue de l'écart (ε) entre la valeur représentative de pression (Pₘ) et la valeur de référence (P_{ref}) excède une première valeur seuil (S₁).

6. Système d'alimentation (20) selon l'une quelconque des revendications 4 et 5, dans lequel le dispositif de surveillance (150) est configuré pour signaler une information de colmatage d'une première partie (132) du circuit de purge, située en amont de l'endroit de la mesure de la valeur représentative de pression (Pₘ), si :
une valeur relative de l'écart (ε) entre la valeur représentative de pression (Pₘ) et la valeur de référence (P_{ref}) est négative et que
la valeur relative de l'écart (ε) est inférieure à une deuxième valeur seuil (S₂).

7. Système d'alimentation (20) selon l'une quelconque des revendications 4 à 6, dans lequel le dispositif de surveillance (150) est configuré pour signaler une information de colmatage d'une deuxième partie du circuit de purge (130), située en aval de l'endroit de la mesure de la valeur représentative de pression (Pₘ), si :
la valeur relative de l'écart (ε) entre la valeur représentative de pression (Pₘ) et la valeur de référence (P_{ref}) est positive et que
la valeur relative de l'écart (ε) est supérieure à une troisième valeur seuil (S₃).

8. Système d'alimentation (20) selon l'une quelconque des revendications 5 à 7, comprenant un dispositif d'alerte (154) configuré pour se déclencher en cas de signalisation d'une information de colmatage par le dispositif de surveillance (150).

9. Procédé de surveillance de colmatage d'un système d'alimentation (20) en carburant selon l'une quelconque des revendications 5 à 8,
**caractérisé en ce qu'**il comprend une étape de signalisation (210, 212) d'une information de colmatage, si la valeur absolue de l'écart (ε) entre la valeur représentative de pression (Pₘ) et la valeur de référence (P_{ref}) excède la première valeur seuil (S₁),
la valeur représentative de pression (Pₘ) étant mesurée entre l'injecteur de démarrage (126) et la première résistance hydraulique (124, 136), lors d'un écoulement d'air de purge entre l'injecteur de démarrage (126) et la première résistance hydraulique (124, 136).

10. Procédé surveillance selon la revendication précédente, dans lequel l'écoulement d'air de purge a lieu depuis l'injecteur de démarrage (126) jusqu'à l'ouverture (133), à travers la première résistance hydraulique (124, 136).

11. Procédé de surveillance selon l'une quelconque des revendications 9 et 10, dans lequel la valeur de référence (P_{ref}) est prédéterminée ou bien dans lequel la valeur de référence (P_{ref}) est déterminée en fonction d'au moins une valeur représentative de pression (Pₘ) au cours d'au moins un vol précédent de la turbomachine (1) qui est une turbomachine pour aéronef et qui comprend le système d'alimentation en carburant.

## Patentansprüche

1. Brennstoff-Zuführsystem (20) einer Turbomaschine (1), das Folgendes umfasst:
eine Startschaltung (120), die mindestens einen Startinjektor (126) umfasst,
mindestens einen ersten hydraulischen Widerstand (124, 136),
einen Spülkreislauf (130), der eine Leitung (131) mit einer Öffnung (133) umfasst, die an der Außenseite des Zuführsystems mündet (20),
wobei der Spülkreislauf (130) so konfiguriert ist, dass Spülluft von dem Startinjektor (126) zu der Öffnung (133) durch den ersten hydraulischen Widerstand (124, 136) strömt,
**dadurch gekennzeichnet, dass** das Zuführsystem (20) Instrumente für die Messung eines repräsentativen Werts des Drucks (141) umfasst, die so konfiguriert sind, dass sie einen repräsentativen Wert des Drucks (Pₘ) zwischen dem Startinjektor (126) und dem ersten hydraulischen Widerstand (124, 136) messen, wenn Spülluft zwischen dem Startinjektor (126) und dem ersten hydraulischen Widerstand (124, 136) strömt.

2. Zuführsystem (20) gemäß dem vorstehenden Anspruch, in dem der Spülkreislauf (130) einen zweiten hydraulischen Widerstand (124) umfasst, der zwischen dem ersten hydraulischen Widerstand (136) und dem Startinjektor (126) angeordnet ist,
wobei die Messinstrumente (141) so konfiguriert sind, dass sie einen repräsentativen Wert des Drucks (Pₘ) zwischen dem ersten hydraulischen Widerstand (136) und dem zweiten hydraulischen Widerstand (124) messen.

3. Zuführsystem (20) gemäß einem der vorstehenden Ansprüche, bei dem der erste hydraulische Widerstand (136) und/oder der zweite hydraulische Widerstand (124) ein Ventil, einen Filter und/oder eine Drosselvorrichtung wie eine Verjüngung der Spülleitung umfasst/umfassen.

4. Zuführsystem (20) gemäß einem der vorstehenden Ansprüche, das eine Vorrichtung zur Verstopfungskontrolle (150) umfasst, die so konfiguriert ist, dass sie den repräsentativen Wert des Drucks (Pₘ) mit einem Referenzwert (P_{ref}) vergleicht.

5. Zuführsystem (20) gemäß dem vorstehenden Anspruch, in dem die Kontrollvorrichtung (150) so konfiguriert ist, dass sie eine Verstopfung meldet, wenn die absolute Differenz (ε) zwischen dem repräsentativen Wert des Drucks (Pₘ) und dem Referenzwert (P_{ref}) einen ersten Schwellenwert (Si) überschreitet.

6. Zuführsystem (20) gemäß Anspruch 4 oder 5, bei dem die Kontrollvorrichtung (150) so konfiguriert ist, dass sie eine Verstopfung eines ersten Teils (132) des Spülkreislaufs meldet, der sich vor der Stelle befindet, an welcher der repräsentative Wert des Drucks (Pₘ) gemessen wird, wenn:
ein relativer Wert der Differenz (ε) zwischen dem repräsentativen Wert des Drucks (Pₘ) und dem Referenzwert (P_{ref}) negativ ist und
der relative Wert der Differenz (ε) niedriger als ein zweiter Schwellenwert (S₂) ist.

7. Zuführsystem (20) gemäß einem der Ansprüche 4 bis 6, bei dem die Kontrollvorrichtung (150) so konfiguriert ist, dass sie eine Verstopfung eines zweiten Teils des Spülkreislaufs (130) meldet, der sich hinter der Stelle befindet, an welcher der repräsentative Wert des Drucks (Pₘ) gemessen wird, wenn:
der relative Wert der Differenz (ε) zwischen dem repräsentativen Wert des Drucks (Pₘ) und dem Referenzwert (P_{ref}) positiv ist und
der relative Wert der Differenz (E) höher als ein dritter Schwellenwert (S₃) ist.

8. Zuführsystem (20) gemäß einem der Ansprüche 5 bis 7, das ein Warnsystem (154) umfasst, das so konfiguriert ist, dass es ausgelöst wird, wenn die Kontrollvorrichtung (150) eine Verstopfung meldet.

9. Verfahren zur Verstopfungskontrolle eines Brennstoff-Zuführsystems (20) gemäß einem der Ansprüche 5 bis 8,
**dadurch gekennzeichnet, dass** es einen Schritt zum Melden (210, 212) einer Verstopfung umfasst, wenn der absolute Wert der Differenz (ε) zwischen dem repräsentativen Wert des Drucks (Pₘ) und dem Referenzwert (P_{ref}) den ersten Schwellenwert (Si) überschreitet,
wobei der repräsentative Wert des Drucks (Pₘ) zwischen dem Startinjektor (126) und dem ersten hydraulischen Widerstand (124, 136) gemessen wird, wenn Spülluft von dem Startinjektor (126) zum ersten hydraulischen Widerstand (124, 136) strömt.

10. Kontrollverfahren gemäß dem vorstehendem Anspruch, bei dem die Spülluft von dem Startinjektor (126) durch den ersten hydraulischen Widerstand (124, 136) bis zur Öffnung (133) strömt.

11. Kontrollverfahren gemäß Anspruch 9 oder 10, bei dem der Referenzwert (P_{ref}) vorbestimmt wird oder bei dem der Referenzwert (P_{ref}) in Abhängigkeit von mindestens einem repräsentativen Wert des Drucks (Pₘ) bestimmt wird, der bei mindestens einem vorhergehenden Flug der Turbomaschine (1) ermittelt wurde, bei der es sich um eine Turbomaschine für ein Luftfahrzeug handelt, die das Brennstoff-Zuführsystem umfasst.

## Claims

1. A fuel supply system (20) for a turbomachine (1), comprising:
a starter circuit (120) comprising at least one starter injector (126),
at least one first hydraulic resistance (124, 136),
a purge circuit (130) comprising a conduit (131) including an aperture (133) opening outside of the supply system (20),
wherein the purge circuit (130) is configured to flow purge air between the starter injector (126) and the aperture (133), through the first hydraulic resistance (124, 136),
**characterised in that** the supply system (20) comprises a pressure representative value measuring means (141) configured to measure a pressure representative value (Pₘ) between the starter injector (126) and the first hydraulic resistance (124, 136), during a purge air flow between the starter injector (126) and the first hydraulic resistance (124, 136).

2. The supply system (20) according to the preceding claim, wherein the purge circuit (130) comprises a second hydraulic resistance (124) located between the first hydraulic resistance (136) and the starter injector (126),
wherein the measuring means (141) is configured to measure the pressure representative value (Pₘ) between the first hydraulic resistance (136) and the second hydraulic resistance (124).

3. The supply system (20) according to any of the preceding claims, wherein the first hydraulic resistance (136) and/or the second hydraulic resistance (124) comprise a valve, a filter and/or a flow restrictor such as a purge conduit shrinkage.

4. The supply system (20) according to any of the preceding claims, comprising a clogging monitoring device (150) configured to compare the pressure representative value (Pₘ) with a reference value (P_{ref}).

5. The supply system (20) according to the preceding claim, wherein the monitoring device (150) is configured to signal a clogging piece of information, if the absolute value of the difference (ε) between the pressure representative value (Pₘ) and the reference value (P_{ref}) exceeds a first threshold value (S₁).

6. The supply system (20) according to any of claims 4 and 5, wherein the monitoring device (150) is configured to signal a clogging piece of information of a first part (132) of the purge circuit, located upstream of the place of the measurement of the pressure representative value (Pₘ), if:
a relative value of the difference (ε) between the pressure representative value (Pₘ) and the reference value (P_{ref}) is negative and
the relative value of the difference (ε) is lower than a second threshold value (S₂).

7. The supply system (20) according to any of claims 4 to 6, wherein the monitoring device (150) is configured to signal a clogging piece of information of a second part of the purge circuit (130), located downstream of the place of the measurement of the pressure representative value (Pₘ), if:
the relative value of the difference (ε) between the pressure representative value (Pₘ) and the reference value (P_{ref}) is positive and
the relative value of the difference (ε) is higher than a third threshold value (S₃).

8. The supply system (20) according to any of claims 5 to 7, comprising an alert device (154) configured to be triggered in case of signalling a clogging piece of information by the monitoring device (150).

9. A method for monitoring clogging of a fuel supply system (20) according to any of claims 5 to 8,
**characterised in that** it comprises a step of signalling (210, 212) a clogging piece of information, if the absolute value of the difference (ε) between the pressure representative value (Pₘ) and the reference value (P_{ref}) exceeds the first threshold value (Si),
wherein the pressure representative value (Pₘ) is measured between the starter injector (126) and the first hydraulic resistance (124, 136), during a purge air flow between the starter injector (126) and the first hydraulic resistance (124, 136).

10. The monitoring method according to the preceding claim, wherein the purge air flow occurs from the starter injector (126) to the aperture (133), through the first hydraulic resistance (124, 136).

11. The monitoring method according to any of claims 9 and 10, wherein the reference value (P_{ref}) is predetermined or wherein the reference value (P_{ref}) is determined as a function of at least one pressure representative value (Pₘ) during at least one previous flight of the turbomachine (1) which is an aircraft turbomachine which comprises the fuel supply system.
